# EUROPEAN PATENT SPECIFICATION

(11) **EP 4 650 373 B1**
(45) Date of publication and mention of the grant of the patent: **13.05.2026**
(21) Application number: 25176907.1
(22) Date of filing: 16.05.2025
(51) Int. Cl.: C08B 13/00, C08B 3/22, C08B 11/20

(54) **METHOD FOR PRODUCING HYDROXYPROPYL METHYLCELLULOSE ACETATE SUCCINATE**
VERFAHREN ZUR HERSTELLUNG VON HYDROXYPROPYLMETHYLCELLULOSEACETATSUCCINAT
PROCÉDÉ DE PRODUCTION D'ACÉTATE SUCCINATE D'HYDROXYPROPYLMÉTHYLCELLULOSE

(30) Priority: 17.05.2024 JP 2024080601
(43) Date of publication of application: 19.11.2025
(73) Proprietor: SHIN-ETSU CHEMICAL CO., LTD.,, Chiyoda-ku, Tokyo 1000005 (JP)
(72) Inventor: INADA, Shinnosuke, Tokyo, 1000005 (JP); MIKI, Kentaro, Niigata, 9428601 (JP); KITAGUCHI, Taishi, Niigata, 9428601 (JP); KITAMURA, Akira, Niigata, 9428601 (JP); NARIITA, Mitsuo, Tokyo, 1000005 (JP)
(74) Representative: Ipsilon

(56) References cited:
- US-A1- 2018 116 968
- US-A1- 2020 031 954
- US-A1- 2023 340 162
- US-A1- 2025 034 285

## Description

### BACKGROUND OF THE INVENTION

### Field of the invention

The present invention relates to a method for producing hydroxypropyl methylcellulose acetate succinate.

### Background art

Hydroxypropyl methylcellulose acetate succinate (hereinafter also referred to as "HPMCAS") is widely known as an enteric polymer which is synthesized by introducing in total four types of substituent groups of which two types of substituents-methyl groups (-CH₃) and hydroxypropyl groups (-CH₂CH(OH)CH₃)-are introduced into a cellulose backbone to form an ether structure and the other two types of substituents -acetyl groups (-COCH₃) and succinyl groups (-COC₂H₄COOH)-are introduced into the cellulose backbone to form an ester structure.

HPMCAS is widely used for the purposes of, for example, coating a tablet, controlling drug release, and preparing a solid dispersion for use together with a water-insoluble drug through hot melt extrusion or spray dry.

Typically, when coating or a spray drying process is performed, HPMCAS, either alone or combined with a drug, needs to be first dissolved in a solvent. In this case, there is a problem that dissolution of HPMCAS takes a significantly long time, and therefore, there has been a long-standing demand for producing the HPMCAS with improved solubility.

JP-A-2017-501239 proposes a method for enhancing the solubility of HPMCAS that includes a process of continually or intermittingly pouring an HPMCAS-containing reaction solution into water to produce particles.

US 2023/340162, US 2020/031954, and US 2018/116968 disclose preparation methods for HPMCAS comprising drying in a fluid bed dryer. They are silent on drying while maintaining the product temperature at 28°C or lower.

### SUMMARY OF THE INVENTION

However, the method described in JP-A-2017-501239 requires the addition of water in an amount of 12 to 20 times the total weight of the reaction medium into the reaction solution after the reaction before performing the precipitation step. This method produces a large amount of drainage leading to issues with production costs and environmental burden. Additionally, the method has room for improvement in the solubility of the HPMCAS particles obtained by this manufacturing method.

The present invention has been made in view of these circumstances, and it is an object of the present invention to provide a method for producing hydroxypropyl methylcellulose acetate succinate by which particle density increment is suppressed and a method for producing hydroxypropyl methylcellulose acetate succinate by which the dissolution time is reduced.

The inventors of the present invention diligently conducted studies to solve the aforementioned problems, and have found that a method having two drying steps including a first drying step of drying HPMCAS using a fluid-bed dryer until the water content is reduced to 30% by mass so that the product temperature does not exceed 28°C to obtain a first dried HPMCAS; and a second drying step of further drying the first dried HPMCAS to obtain HPMCAS can suppress increment in particle density after being dried without any careful management of the materials and manufacturing, and improves dissolution time for dissolving HPMCAS into a solvent, thus completing the invention.

The present invention provides a method for producing hydroxypropyl methylcellulose acetate succinate as defined below.
<1> A method for producing hydroxypropyl methylcellulose acetate succinate including:
   a liquid removal step of
      allowing hydroxypropyl methylcellulose, an acetylating agent, and a succinoylating agent to react with each other in the presence of a catalyst to produce a reaction solution,
      mixing water with the reaction solution to obtain a suspension of hydroxypropyl methylcellulose acetate succinate, and
      removing liquid from the suspension of hydroxypropyl methylcellulose acetate succinate to obtain liquid-removed hydroxypropyl methylcellulose acetate succinate;
   a first drying step of drying the liquid-removed hydroxypropyl methylcellulose acetate succinate using a fluid-bed dryer until it reaches a water content of 30% by mass while maintaining the product temperature at 28°C or lower to obtain first dried hydroxypropyl methylcellulose acetate succinate; and
   a second drying step of further drying the first dried hydroxypropyl methylcellulose acetate succinate to obtain hydroxypropyl methylcellulose acetate succinate.
<2> The method according to <1>, wherein the hydroxypropyl methylcellulose acetate succinate in the first drying step has a product temperature of 5 to 28°C.
<3> The method according to <1> or <2>, wherein the first drying step involves an inlet air temperature of 5 to 70°C.
<4> The method according to any one of <1> to <3>, wherein a fluid-bed dryer is used as a dryer for use in the second drying step.
<5> The method according to one of <1> to <4>, wherein the liquid-removed hydroxypropyl methylcellulose acetate succinate immediately before being subjected to the first drying step has a water content of 55 to 80% by mass.
<6> The method according to one of <1> to <5>, wherein the hydroxypropyl methylcellulose acetate succinate has a water content of 5% by mass or lower.

The present invention enables HPMCAS particles, which are heat susceptible material, to maintain suppressed particle density increase by using a fluid-bed dryer solely to control the product temperature during the drying step. This feature produces the HPMCAS having low bulk density by controlling the product temperature in the first drying step. Further, the resultant HPMCAS has low particle density, which enables significant reduction in dissolution time and improves the production efficiency of the HPMCAS solution or a mixed solution of HPMCAS and a drug. Furthermore, this method can readily be employed because it is not necessary to change the existing manufacturing facility.

### DETAILED DESCRIPTION OF THE INVENTION

The method for producing HPMCAS according to the present invention contains essentially a liquid removal step, a first drying step, and a second drying step. The method for producing HPMCAS according to the present invention may further contain a washing step as necessary.

### [Liquid removal step]

In the liquid removal step, hydroxypropyl methylcellulose is first reacted with an acetylating agent and a succinoylating agent in the presence of a catalyst to produce a reaction solution (esterification reaction step), and then the reaction solution is mixed with water to produce a suspension of hydroxypropyl methylcellulose acetate succinate (precipitation step), followed by removing liquid from the suspension of hydroxypropyl methylcellulose acetate succinate to obtain liquid-removed hydroxypropyl methylcellulose acetate succinate.

A method for obtaining hydroxypropyl methylcellulose (hereafter also referred to as "HPMC") which is a raw material of HPMCAS will be explained below.

HPMC obtained by a known method may be used or the one that is commercially available may be used. HPMC may, for example, be prepared in such a manner where a solution of an alkali metal hydroxide such as sodium hydroxide and potassium hydroxide is at first brought into contact with, for example, a sheet-, chip- or powder-like pulp to form an alkali cellulose, followed by adding an etherifying agent such as methyl chloride and propylene oxide to perform the reaction.

The solution of alkali metal hydroxide for use in preparing the alkali cellulose is not particularly limited so long as an alkali cellulose of desired composition may be obtained but it is preferred in terms of economical perspective that the solution be a solution of sodium hydroxide or potassium hydroxide. Further, in terms of stabilizing the composition of the alkali cellulose and securing the transparency of the cellulose ether, it is preferred that the alkali metal hydroxide solution have a concentration of 23 to 60% by mass, more preferably 35 to 55% by mass.

After producing the alkali cellulose, a conventional method may be used to add an etherifying agent such as methyl chloride or propylene oxide to the alkali cellulose to perform an etherification reaction to thereby obtain HPMC.

The degree of substitution (DS) of methoxy groups of HPMC is preferably 1.10 to 2.20, more preferably 1.40 to 2.00, and even more preferably 1.60 to 2.00, in terms of obtaining HPMC with a small number of insoluble fibers. The molar substitution (MS) of hydroxypropoxy groups of HPMC is preferably 0.10 to 1.00, more preferably 0.20 to 0.80, and even more preferably 0.20 to 0.65, in terms of obtaining HPMC with a small number of insoluble fibers.

The term "insoluble fibers" as used herein refers to water-insoluble parts of the fibers that are contained in HPMC. HPMC exhibits water solubility after having the hydroxyl groups in cellulose partially etherified, thereby weakening the hydrogen bonds in the intra-molecule and inter-molecule of cellulose. Since it is industrially difficult to perform etherification in a perfectly uniform manner, HPMC may contain parts that are insoluble in water, i.e., the insoluble fibers, due to an insufficient degree of substitution of ether groups or an ununiform substitution of ether groups. If HPMCAS contains a large number of insoluble fibers in the final product, the yield of an enteric coating preparation will decrease due to an ununiform enteric film, or productivity will decline as filter clogging will frequently occur in a filtration step of the coating solution; it is therefore preferred that HPMC as a raw material of HPMCAS have a small number of insoluble fibers. The number of insoluble fibers may be calculated by, for example, analyzing the HPMC aqueous solution with the aid of a device such as a Coulter counter.

It is noted that with respect to HMPC, the DS of methoxy groups as used herein refers to a degree of substitution of the methoxy groups, which is an average number of methoxy groups per number of anhydroglucose unit, and the MS of hydroxypropoxy groups refers to a molar substitution of the hydroxypropoxy groups, which is an average number of moles of hydroxypropoxy groups per mole of anhydroglucose. The DS of methoxy groups and the MS of hydroxypropoxy groups of HPMC may be determined based on the converted values of the values obtained by the respective measurements performed in accordance with the Japanese Pharmacopoeia 18th Edition.

It is preferred in terms of kneadability in performing the esterification reaction that the viscosity at 20°C of a 2% by mass aqueous solution of HPMC be 2.2 to 7.2 mPa·s, more preferably 3.0 to 3.5 mPa·s.

The viscosity at 20°C of a 2% by mass aqueous solution of HPMC may be determined in accordance with the viscosity measurement by capillary tube viscometer as stipulated in the Japanese Pharmacopoeia, 18th Edition.

It is preferred in terms of economical perspective that the catalyst for use in the esterification reaction step be an alkali metal carboxylate such as sodium acetate. It is preferred in terms of the composition (degree of substitution) and yield of the resultant HPMCAS that the catalyst be contained in such an amount that a molar ratio thereof to the raw material HPMC is 0.1 to 1.5, more preferably 0.6 to 1.1.

Examples of the acetylating agent for use as an esterification agent in the esterification reaction step include acetic anhydride and acetyl chloride, among which acetic anhydride is preferred in terms of economical perspective.

It is preferred in terms of the composition (degree of substitution) and yield of the resultant HPMCAS that the acetylating agent be contained in such an amount that a molar ratio thereof to the raw material HPMC is 0.1 to 1.5, more preferably 1.1 to 1.3.

Examples of the succinoylating agent for use as an esterification agent in the esterification reaction step include succinic anhydride and succinyl chloride, among which succinic anhydride is preferred in terms of economical perspective.

It is preferred in terms of the composition (degree of substitution) and yield of the resultant HPMCAS that the succinoylating agent be contained in such an amount that a molar ratio thereof to the raw material HPMC is 0.1 to 1.0, more preferably 0.3 to 0.5.

The esterification reaction step may be carried out in the presence of a solvent which is preferably the one capable of dissolving HPMC, an esterification agent, and a catalyst. Examples of such solvent include acetic acid, propionic acid, and butyric acid, among which acetic acid is preferred in terms of economical perspective. It is preferred in terms of reaction rate that the solvent be used in such an amount that a mass ratio thereof to the mass of the HPMC is 1.0 to 3.0, more preferably 1.2 to 2.0, and even more preferably 1.5 to 1.8.

Examples of the reactor to be used for esterification reaction in the esterification reaction step include, for example, a twin-shaft mixer capable of mixing a high-viscosity fluid to make a uniform mixture. Specifically, there may be used a commercially marketed mixer such as the one called under the name of a kneader or an internal mixer.

It is preferred in terms of reaction speed or viscosity increment that the reaction temperature in the esterification reaction step be 60 to 100°C, more preferably 80 to 90°C. It is also preferred in terms of obtaining HPMCAS having a desired degree of substitution that the reaction time of the esterification reaction step be 2 to 8 hours, more preferably 3 to 6 hours.

After the esterification reaction is over, water may be added to the reaction solution for the purpose of treating the unreacted acetylating agent and succinoylating agent (the mixing treatment with water after performing the esterification reaction is also referred to as "post-treatment"). The amount of water to be added into the reaction solution in the esterification reaction step for the purpose of post-treatment is in such an amount that a mass ratio thereof to the mass of the HPMC is preferably 0.8 to 1.5, more preferably 1.0 to 1.3.

In the precipitation step, the reaction solution obtained in the esterification reaction step is mixed with water to obtain an HPMCAS suspension by precipitating a crude HPMCAS.

It is preferred in terms of precipitation degree and treating time of HPMCAS that water be mixed in the precipitation step with the reaction solution in such an amount that a mass ratio thereof to the mass of HPMC used in the esterification reaction is 3.0 to 50.0, more preferably 5.0 to 20.0.

It is also preferred, in terms of controlling the particle diameter of the HPMCAS particles in the HPMCAS suspension, that the water mixed with the reaction solution in the precipitation step have a temperature of 0 to 40°C, more preferably 0 to 30°C.

Further, it is also preferred, in terms of controlling the particle diameter of the HPMCAS particles in the HPMCAS suspension, that the reaction solution immediately before being mixed with water have a temperature of 10 to 80°C, more preferably of 10 to 50°C.

It is preferred, in terms of reducing water content in the liquid-removed HPMCAS after the liquid removal step to be explained below, that the suspended particles in the HPMCAS suspension obtained in the precipitation step have an average particle diameter of larger than or equal to 150 µm, more preferably of 150 to 4000 µm, and even more preferably of 150 to 2000 µm. The esterification reaction step and precipitation step may be carried out under the conditions described above for making the suspended particles have an average particle diameter within the above range.

The concentration of the HPMCAS suspension (i.e. weight proportion of suspended particles per unit weight of suspension) obtained in the precipitation step is not particularly limited, but it is preferred from the standpoint of, for example, cohesiveness of suspended particles in the subsequent liquid removal step that the concentration be equal to or less than 20% by weight, more preferably equal to or less than 15% by weight. The HPMCAS suspension to be obtained in the precipitation step may have a concentration whose lower limit is not particularly limited but it is preferred in terms of productivity that the limit be 0.1% by mass. The amount of water to be added in the precipitation step may be suitably adjusted so that the HPMCAS suspension has a concentration within the above range. For example, the amount of water in the suspension may be suitably adjusted before it is supplied to the liquid removal step so that the HPMCAS suspension has a concentration within the above range.

Further, it is preferred from the standpoint of, for example, cohesiveness of suspended particles in the subsequent liquid removal step that the HPMCAS suspension obtained in the precipitation step have a temperature adjusted to 80°C or lower, more preferably to 60°C or lower, even more preferably to 40°C or lower before it is subjected to the liquid removal step. The HPMCAS suspension may have a temperature whose lower limit is not particularly limited but it is preferred in terms of handleability that the limit be 0°C.

The resultant HPMCAS suspension may contain remaining impurities including salts, free acetic acid, and free succinic acid. For this reason, a washing step may be introduced as necessary between the precipitation step and the liquid removal step, where, in the washing step, crude HPMCAS in the HPMCAS suspension obtained in the precipitation step is washed to give an HPMCAS suspension to be used in the liquid removal step.

The HPMCAS suspension may be washed by a method of, for example, removing water from the HPMCAS suspension using a technique such as filtration, and then suspending the HPMCAS again into a clean solvent. In the washing step, partial removal of water from the HPMCAS suspension using, for example, filtration and resuspension into a solvent may be repeated multiple times.

Examples of the solvent for use in washing include water.

This washing step typically involves washing crude HPMCAS by, for example, water using a filtration apparatus such as a batch-type stirring filtration apparatus, a continuous type rotary pressure filtration apparatus, a continuous type horizontal vacuum filtration apparatus, a horizontal table filtration apparatus, and a horizontal belt filtration apparatus.

It is preferred that the HPMCAS suspension obtained after the washing step have an average particle diameter of the suspended particles and a concentration and temperature of the HPMCAS suspension which are all the same as those of the HPMCAS suspension obtained in the precipitation step.

Water may be appropriately added thereinto after the washing step so that the HPMCAS suspension that is obtained after the washing step and used in the liquid removal step has a concentration within the above range.

In the liquid removal step, the HPMCP suspension is subjected to liquid removal using a dehydrator between the washing step and the drying step or, when the washing step is not performed, between the precipitation step and the drying step for reducing water content of HPMCAS suspension or for reducing the load of drying to thereby obtain liquid-removed HPMCAS.

A dehydrator such as a pressure dehydrator, a vacuum dehydrator, a centrifugal dehydrator, a compression-type dehydrator and a decanter-type centrifugal separator may normally be used for the liquid removal.

It is preferred in terms of drying efficiency that the liquid-removed HPMCAS obtained after the liquid removal step have a water content of, although not limited to the following, 55 to 80% by mass, more preferably 55 to 70% by mass, and even more preferably 60 to 70% by mass.

The water content of the liquid-removed HPMCAS may be determined in accordance with the procedure described in "Loss on Drying Test" under "2. Physical Methods" in "General Tests" of the Japanese Pharmacopoeia 18th Edition. More specifically, the water content of HPMCAS is defined as {(Total mass of HPMCAS - Absolute dry mass of HPMCAS)/(Total mass of HPMCAS)} × 100%, wherein the term "Total mass of HPMCAS" refers to the mass of HPMCAS which is precisely determined in accordance with the procedure described in "Loss on Drying Test" in the Japanese Pharmacopoeia 18th Edition. Further, the term "Absolute dry mass of HPMCAS" refers to the mass of HPMCAS which was dried in accordance with the procedure described in "Loss on Drying Test" in the Japanese Pharmacopoeia 18th Edition.

Here, when determining the "water content of the liquid-removed HPMCAS", the "Water content of the liquid-removed HPMCAS" may be determined or calculated in accordance with the above-defined formula in such a manner that the term "HPMCAS" is replaced with the term "liquid-removed HPMCAS". The water content of HPMCAS in each step, including the water content of the first dried HPMCAS described below, may also be determined in a similar manner.

It is also preferred in terms of controlling the product temperature in a subsequent first drying step that the liquid-removed HPMCAS subjected to the first drying step have a temperature above 0°C and 28°C or lower, more preferably of 5 to 28°C, even more preferably of 10 to 25°C, and most preferably of 12 to 20°C.

### [Drying step]

In the drying step, the liquid-removed HPMCAS obtained in the liquid removal step is dried until it reaches the intended water content (e.g., 0.1 to 5.0% by mass).

The drying step is comprised of a first drying step of obtaining a first dried HPMCAS using a fluid-bed dryer; and a second drying step of further drying the first dried HPMCAS using a dryer to obtain HPMCAS.

### [First drying step]

In the first drying step, the liquid-removed HPMCAS obtained in the liquid removal step is dried using a fluid-bed dryer until it reaches a water content of 30% by mass. Any drying temperature may be used so long as the product temperature in the first drying step does not exceed 28°C but it is preferred in terms of suppressing the particle density of HPMCAS, as a heat susceptible material, from being increased and drying efficiency that the drying temperature be 5 to 70°C, more preferably 5 to 60°C, and even more preferably 30 to 60°C. The term "drying temperature" as used herein refers to an inlet air temperature of an inlet air supplied into a fluid bed.

The product temperature in the first drying step is, as described above, set as 28°C or lower, preferably as 0 to 28°C, more preferably as 5 to 28°C, and even more preferably as 15 to 25°C. The product temperature above 28°C may increase particle density and deteriorate solubility.

An excessively short duration for the first drying step may fail to achieve uniform drying of the liquid-removed HPMCAS, leading to localized increases in particle density. For this reason, it is preferred that the duration be 5 minutes or longer, more preferably 10 minutes or longer.

Under constant drying conditions such as drying temperature, after the onset of drying, the temperature of the liquid-removed HPMCAS to be dried increases during a pre-heating period, and then, while the product temperature of HPMCAS is maintained at a constant temperature during a constant drying rate period, the water content of HPMCAS gradually decreases, and then, the product temperature of HPMCAS rises again during a falling drying rate period.

Following the onset of the first drying step, the product temperature and water content of HPMCAS are continuously monitored to determine if the product has transitioned into the second drying step once the HPMCAS has reached to a water content of 30% by mass or less, and to confirm that the maximum product temperature during the first drying step does not exceed 28°C based on the temperature change as mentioned above.

### [Second drying step]

In the second drying step, a first dried HPMCAS obtained in the first drying step is further dried until the first dried HPMCAS has reached to a desired water content. Any drying temperature may be used so long as it achieves the desired water content but it is preferred in terms of drying efficiency that the temperature be 30 to 95°C, more preferably 50 to 95°C. Any dryer may be used so long as it achieves the desired water content, and examples of such dryer include a vacuum drier, a fluidized-bed dryer, and a flash dryer, but it is preferred in terms of allowing drying in an efficient manner while preventing the HPMCAS particles from being adhered to each other that the dryer be a fluidized-bed dryer.

It is preferred that the HPMCAS obtained in the second drying step have a water content of above 0% by mass and 5% by mass or less, more preferably of 0.1 to 4% by mass, and even more preferably of 0.1 to 3% by mass.

It is preferred that the air supplied in the first and second drying steps have a humidity (relative humidity) of 0 to 50 RH%, more preferably of 0 to 25 RH%, and even more preferably of 0 to 10 RH% in terms of enhancing drying efficiency and inhibiting a rise in wet-bulb temperature in a constant drying rate period or a rise in a product temperature.

It is preferred that the air flow supplied to the fluid-bed dryer in the first and second steps have an air flow speed whose lower limit is high enough to enable visual confirmation that the HPMCAS particles are sufficiently fluidized. It is also preferred that the supplied air flow have an air flow speed whose upper limit is low enough-although faster airflow shortens the duration of the drying steps- to prevent particle pulverization due to collisions between particles or to prevent the decrease in yield caused by particle adhesion to the exhaust filter or the upper part of the can body. The specific upper and lower limits are determined such that it preferably is in a range of 0.1 to 5.0 m/sec, more preferably of 0.2 to 3.5 m/sec.

### [Hydroxypropyl methylcellulose acetate succinate]

The degree of substitution of HPMCAS, as obtained by the method of the present invention, will be discussed.

The DS of methoxy groups of HPMCAS is preferably 1.10 to 2.20, more preferably 1.40 to 2.00, and even more preferably 1.60 to 2.00.

The MS of hydroxypropoxy groups of HPMCAS is preferably 0.10 to 1.00, more preferably 0.20 to 0.80, and even more preferably 0.20 to 0.65.

The DS of acetyl groups of HPMCAS is preferably 0.10 to 2.50, more preferably 0.10 to 1.00, and even more preferably 0.20 to 0.80.

The DS of succinyl groups of HPMCAS is preferably 0.10 to 2.50, more preferably 0.10 to 1.00, and even more preferably 0.10 to 0.60.

It is preferred in terms of solubility that the ratio of the DS of acetyl groups to the DS of succinyl groups in HPMCAS (acetyl groups/succinyl groups) be 0.50 to 4.00, more preferably 0.80 to 3.70.

The DSs of methoxy groups, acetyl groups, and succinyl groups of HPMCAS represent the degrees of substitutions, and refer to the average numbers of the methoxy groups, acetyl groups, and succinyl groups, respectively, per number of anhydroglucose unit. The MS of hydroxypropoxy groups of HPMCAS represents a molar substitution of hydroxypropoxy groups, and refers to the average mole number of hydroxypropoxy groups per 1 mol of anhydroglucose.

The DSs of methoxy groups, acetyl groups, and succinyl groups of HPMCAS, and the MS of hydroxypropoxy groups of HPMCAS may be calculated by converting the values obtained in accordance with the method in the monographs "Hypromellose acetate ester succinate ester" of the Japanese Pharmacopoeia 18th Edition.

It is preferred in terms of powder fluidity and drug mixability that the HPMCAS obtained in this manner have an average particle diameter (D50) of 70 to 2000 µm, more preferably of 150 to 1750 µm, and even more preferably of 300 to 1500 µm. The average particle diameter (D50) of HPMCAS may be determined by dry laser diffractometry (using, for example, a Mastersizer manufactured by Malvern Panalytical Ltd. in the UK).

The HPMCAS obtained by the production method of the present invention exhibits suppressed increment in particle density and shortened dissolution time.

The loose bulk density and tapped bulk density of HPMCAS thus obtained in this manner will now be described.

It is preferred in terms of enhancing the dissolution rate of HPMCAS that the HPMCAS have a loose bulk density of 0.1 to 0.5 g/cm³, more preferably of 0.1 to 0.45 g/cm³. The term "Loose bulk density" refers to a bulk density in a loosely packed state, and is measured by uniformly supplying a sample through a 24-mesh sieve into a cylindrical container having a diameter of 5.03 cm and a height of 5.03 cm (volume: 100 ml) from 23 cm above the cylindrical container, and leveling the supplied sample at the top face of the container for weighing.

It is preferred in terms of enhancing the dissolution rate of HPMCAS that the HPMCAS have a tapped bulk density of 0.1 to 0.6 g/cm³, more preferably of 0.1 to 0.5 g/cm³. The term "tapped bulk density" refers to a bulk density in the state where a sample is closely packed by tapping. The term "tapping" refers to an operation in which a cylindrical container filled with a sample is repeatedly dropped from a predetermined height to apply a light impact to the bottom of the container, thereby closely packing the sample in the container. Specifically, as is the case of measuring the "loose bulk density", a sample is supplied into the cylindrical container, and the supplied sample is leveled at the top face of the container for weighing, and then the cylindrical container is capped at the top with a cap, after which the cap is filled with the sample up to the upper edge of the cap, and subjected to 180 times of tapping from a tap height of 1.8 cm. After the tapping has been completed, the cap is removed from the container, and then the sample is leveled at the top face of the container for weighing. The bulk density of this state is determined as the tapped bulk density.

A powder tester manufactured by Hosokawa Micron Corporation may be used for measuring the "loose bulk density" and the "tapped bulk density".

### WORKING EXAMPLES

The present invention is described in detail hereunder with reference to working and comparative examples; the present invention shall not be limited in any way to the following working examples.

The water content, substitution degree, loose bulk density, tapped bulk density and average particle diameter (D50) of HPMCAS obtained in each example were measured using the methods as explained above.

The time for dissolving HPMCAS obtained in each example into a solvent was measured by the method to be explained below.
3.0 g of HPMCAS was accurately weighed into a CC27 measurement cup (CC27/T200/AL, a cylindrical aluminum container having a diameter of 29 mm and a height of 68 mm, manufactured by Anton Paar GmbH)) of a rheometer MCR 301 (manufactured by Anton Paar GmbH), and then a distilled water of 25°C was added thereinto so that the solution has a final HPMCAS concentration of 10% by mass, and the mixture was thoroughly mixed with stirring by using a blade-type measurement jig (ST24-2D/2V/2V-30 manufactured by Anton Paar GmbH) to allow the HPMCAS to be completely dispersed in the distilled water. The measurement cup and the blade-type measurement jig were set up in the apparatus, and the dispersion was stirred at 400 rpm for 2 minutes while the temperature thereof was controlled at 25°C. After 2 minutes, a 10% aqueous ammonia solution required to neutralize 100% of the carboxyl groups in the HPMCAS was added thereinto while continuing to maintain the temperature at 25°C and stirring at 400 rpm. The moment at which the 10% aqueous ammonia solution was added was designated as time zero (0 min), from which torque measurements were recorded every minute for 120 minutes. The maximum torque value observed during this period of 120 minutes was identified, and the dissolution time was defined as the time point at which the torque reached 99% of this maximum torque value of 120 minutes.

The conditions for producing HPMCAS of Working Examples and Comparative Examples are as shown in Table 1, while physical properties of HPMCAS obtained in Working Examples and Comparative Examples are as shown in Table 2.

### Working Example 1

Here, 1376 g of glacial acetic acid was weighed and put into a 5L horizontal kneader reactor (model PNV-5T by IRIE SHOKAI Co., Ltd.) equipped with a twin-shaft stirring blade (Z-type stirring blade for PNV-5T, material SUS316L, by IRIE SHOKAI Co., Ltd.). Next, there were added 860 g of HPMC whose DS of methoxy groups was 1.88, whose MS of hydroxypropoxy groups was 0.24, and whose 2% by mass aqueous solution had a viscosity of 3.2 mPa·s at 20°C; 495.4 g of acetic anhydride; 262.3 g of succinic anhydride; and 415.0 g of sodium acetate to cause an esterification reaction for 5 hours at 85°C to obtain a reaction solution.

Water at 20°C was gradually added to the resultant reaction solution (75°C) in an amount 5.0 times the mass of the reaction solution, thus resulting in a suspension with precipitated HPMCAS-1. The precipitated HPMCAS-1 was then filtrated on an 80-mesh sieve to obtain a crude HPMCAS-1.

The resultant crude HPMCAS-1 was resuspended in 20°C water whose amount was 10 times the mass of the raw material HPMC, and the mixture was stirred for 10 minutes followed by filtrating the stirred product on an 80-mesh sieve. This operation involving resuspension, stirring, and filtration was repeated 5 times to obtain washed HPMCAS-1.

The washed HPMCAS-1 was resuspended in 20°C water whose amount was 10 times the mass of the raw material HPMC, and then was subjected to liquid removal by using a filtration type centrifugal dehydrator (upper discharge type centrifugal separator, type H-130A, manufactured by KOKUSAN Co., Ltd.) at a centrifugal effect of 600 G to obtain liquid-removed HPMCAS-1. The liquid-removed HPMCAS-1 had a water content of 67% by mass.

1 kg of the liquid-removed HPMCAS-1 (Water content of 67% by mass, product temperature of 8°C) was put into a fluid-bed dryer (FD-LAB-1 manufactured by POWREX CORPORATION) to initiate the first drying step while keeping the inlet air flow speed at 2.8 m/sec and the inlet air temperature at 40°C. The samples were timely taken out during the drying process to measure their water contents. The product reached a product temperature of 18°C after 5 minutes from the onset of the first drying step and this product temperature was maintained at 18°C until 20 minutes. The product temperature began to rise from its initial 18°C after 20 minutes from the onset of the first drying step, and 40 minutes later, the water content reached 27% by mass, indicating the completion of the first drying step and the commencement of the second drying step. The product temperature at this time was 20°C and it did not exceed 20°C from the onset of the first drying step to the end of the first drying step.

Subsequently, the second drying step was followed in the same fluid-bed dryer, under the same conditions as those when the first drying step was initiated, except that the inlet air temperature was set to 80°C. The product temperature reached 70°C after 20 minutes from the change in inlet air temperature at which the second drying step was completed, thus resulting in HPMCAS.

### Working Example 2

The first drying step of drying 1 kg of the liquid-removed HPMCAS-1 (Water content of 67% by mass, product temperature of 8°C) was initiated under the same conditions as those of Working Example 1 except that the inlet air temperature of the fluid-bed dryer was set to 60°C. The samples were timely taken out during the drying process to measure their water contents. The product reached a product temperature of 23°C after 5 minutes from the onset of the first drying step and this product temperature was maintained at 23°C until 15 minutes. The product temperature began to rise from its initial 23°C after 15 minutes from the onset of the first drying step, and 30 minutes later, the water content reached 22% by mass, indicating the completion of the first drying step and the commencement of the second drying step. The product temperature at this time was 26°C and it did not exceed 26°C from the onset of the first drying step to the end of the first drying step.

Subsequently, the second drying step was followed in the same fluid-bed dryer, under the same conditions as those when the first drying step was initiated, except that the inlet air temperature was set to 80°C. The product temperature reached 70°C after 15 minutes from the change in inlet air temperature, and then the second drying step was completed, thus resulting in HPMCAS.

### Working Example 3

Here, 1440 g of glacial acetic acid was weighed and put into a 5L horizontal kneader reactor (model PNV-5T manufactured by IRIE SHOKAI Co., Ltd.) equipped with a twin-shaft stirring blade (Z-type stirring blade for PNV-5T, material SUS316L, manufactured by IRIE SHOKAI Co., Ltd.). Next, there were added 900 g of HPMC whose DS of methoxy groups was 1.88, whose MS of hydroxypropoxy groups was 0.24, and whose 2% by mass aqueous solution had a viscosity of 3.2 mPa·s at 20°C; 460 g of acetic anhydride; 160 g of succinic anhydride; and 400 g of sodium acetate to cause an esterification reaction for 5 hours at 85°C to obtain a reaction solution.

Water at 20°C was gradually added to the resultant reaction solution (75°C) in an amount 5 times the mass of the reaction solution, thus resulting in a suspension with precipitated HPMCAS-2. The precipitated HPMCAS-2 was then filtrated on an 80-mesh sieve to obtain a crude HPMCAS-2.

The resultant crude HPMCAS-2 was resuspended in 20°C water whose amount was 10 times the mass of the raw material HPMC, and then the mixture was stirred for 10 minutes followed by filtrating the stirred product on an 80-mesh sieve. This operation involving resuspension, stirring, and filtration was repeated 5 times to obtain washed HPMCAS-2.

The washed HPMCAS-2 was resuspended in 20°C water whose amount was 10 times the mass of the raw material HPMC, and then was subjected to liquid removal by using a filtration type centrifugal dehydrator (upper discharge type centrifugal separator, type H-130A, manufactured by KOKUSAN Co., Ltd.) at a centrifugal effect of 600 G to obtain liquid-removed HPMCAS-2. The liquid-removed HPMCAS-2 had a water content of 67% by mass.

1 kg of the liquid-removed HPMCAS-2 (Water content of 67% by mass, Product temperature of 8°C) was put into a fluid-bed dryer (FD-LAB-1 manufactured by POWREX CORPORATION) to initiate the first drying step while keeping the inlet air flow speed at 2.8 m/sec and the inlet air temperature at 40°C. The samples were timely taken out during the drying process to measure their water contents. The product reached a product temperature of 18°C after 5 minutes from the onset of the first drying step and this product temperature was maintained at 18°C until 20 minutes. The product temperature began to rise from its initial 18°C after 20 minutes from the onset of the first drying step, and 40 minutes later, the water content reached 28% by mass, indicating the completion of the first drying step and the commencement of the second drying step. The product temperature at this time was 20°C and it did not exceed 20°C from the onset of the first drying step to the end of the first drying step.

Subsequently, the second drying step was followed in the same fluid-bed dryer, under the same conditions as those when the first drying step was initiated, except that the inlet air temperature was set to 80°C. The product temperature reached 70°C after 20 minutes from the change in inlet air temperature, and then the second drying step was completed, thus resulting in HPMCAS.

### Comparative Example 1

The drying of 1 kg of the liquid-removed HPMCAS-1 (Water content of 67% by mass, product temperature of 8°C) was initiated under the same conditions as those of Working Example 1 except that the inlet air temperature of the fluid-bed dryer was set to 80°C. The product temperature reached 29°C after 5 minutes from the onset of the drying and this product temperature was maintained at 29°C until 10 minutes. The water content at this time was 61% by mass. The product temperature began to rise from its initial 29°C after 10 minutes from the onset of the drying step, and 25 minutes later, the water content reached 19% by mass. The product temperature at this time was 35°C.

The drying step was followed using the same conditions and the product temperature reached 70°C after 40 minutes from the onset of the drying, and then the drying was completed.

### Comparative Example 2

The drying of 1 kg of the liquid-removed HPMCAS-2 (Water content of 67% by mass, product temperature of 8°C) was initiated in the first frying step under the same conditions as those of Working Example 3 except that the inlet air temperature of the fluid-bed dryer was set to 80°C.

The product temperature reached 29°C after 5 minutes from the onset of the first drying step and this product temperature was maintained at 29°C until 10 minutes. The water content at this time was 63% by mass. The product temperature began to rise from its initial 29°C after 10 minutes from the onset of the first drying step, and 25 minutes later, the water content reached 20% by mass, marking the end of the first drying step. The product temperature at this time was 34°C.

Subsequently, the second drying step was initiated in the same fluid-bed dryer without changing the inlet air temperature under the same conditions as those of the first drying step. The product temperature reached 70°C after 15 minutes from the onset of the second drying step, and then the second drying step was completed.

**Table 1**

| | Liquid-removed HPMCAS | Water content of Liquid-removed HPMCAS | Product temperature of Liquid-removed HPMCAS | First drying step *1 | | | | | | Second drying step *2 | | | | |
|---|---|---|---|---|---|---|---|---|---|---|---|---|---|---|
| | | | | Dryer | Drying temperature | Product temperature during constant drying rate period | Maximum product temperature during drying | Drying time | Air flow speed | Dryer | Drying temperature | Drying time | Air flow speed | Water content of HPMCAS |
| | - | % by mass | °C | - | °C | °C | °C | Min. | m/s | - | °C | Min. | m/s | % by mass |
| Working Example 1 | HPMCAS-1 | 67 | 8.0 | Fluid-bed dryer | 40 | 18 | ≤ 20 | 35 to 40 | 2.8 | Fluid-bed dryer | 40 → 80 | 15 to 20 | 2.8 | 0.9 |
| Working Example 2 | HPMCAS-1 | 67 | 8.0 | Fluid-bed dryer | 60 | 23 | ≤ 26 | 25 to 30 | 2.8 | Fluid-bed dryer | 60 → 80 | 10 to 15 | 2.8 | 0.9 |
| Working Example 3 | HPMCAS-2 | 67 | 8.0 | Fluid-bed dryer | 40 | 18 | ≤ 20 | 35 to 40 | 2.8 | Fluid-bed dryer | 40 → 80 | 15 to 20 | 2.8 | 1.1 |
| Comparative Example 1 | HPMCAS-1 | 67 | 8.0 | Fluid-bed dryer | 80 | 29 | 31 ≤ | 25 to 30 | 2.8 | Fluid-bed dryer | 80 | 15 to 20 | 2.8 | 1.2 |
| Comparative Example 2 | IIPMCAS-2 | 67 | 8.0 | Fluid-bed dryer | 8.0 | 29 | 31 ≤ | 25 to 30 | 2.8 | Fluid-bed dryer | 80 | 15 to 20 | 2.8 | 1.1 |

| | | | | | | | | | | | | | | |
|---|---|---|---|---|---|---|---|---|---|---|---|---|---|---|
| *1 The items in first drying step of each comparative example indicate drying conditions up to the point where the water content reached 30% by mass. *2 The items in second drying step of each comparative example indicate the drying conditions from the point at which the water content reached 30% by mass until the completion of the entire drying process. | | | | | | | | | | | | | | |

**Table 2**

| | Physical properties | | | | | | | | |
|---|---|---|---|---|---|---|---|---|---|
| | Water content | MeO | HPO | Ac | Suc | Loose bulk density | Tapped bulk density | D50 | Dissolution time |
| | % by mass | DS | MS | DS | DS | g/cm³ | g/cm³ | µm | min |
| Working Example 1 | 0.9 | 1.87 | 0.24 | 0.46 | 0.38 | 0.258 | 0.272 | 450 | 28 |
| Working Example 2 | 0.9 | 1.87 | 0.24 | 0.46 | 0.38 | 0.288 | 0.313 | 460 | 32 |
| Working Example 3 | 1.1 | 1.90 | 0.25 | 0.54 | 0.30 | 0.226 | 0.265 | 560 | 17 |
| Comparative Example 1 | 1.2 | 1.87 | 0.24 | 0.46 | 0.38 | 0.353 | 0.381 | 460 | 44 |
| Comparative Example 2 | 1.1 | 1.90 | 0.25 | 0.54 | 0.30 | 0.323 | 0.367 | 590 | 37 |

The results as shown in Working examples 1 and 2 and Comparative examples indicate favorable dissolution rates of HPMCAS into a solvent when the HPMCAS was obtained by a method including a first drying step of drying the product while maintaining the product temperature at 28°C or lower to obtain a first dried HPMCAS having a water content of 30% by mass, and a second step of further drying the first dried HPMCAS. Particularly, the HPMCAS indicated an enhanced dissolution rate into a solvent when the product was dried in a fluid bed in the first drying step while keeping the product temperature above 0°C and lower than or equal to 20°C.

The results of Working Example 3 demonstrate the technical knowledge that HPMCAS with different degrees of substitution is comparably effective as well.

## Claims

1. A method for producing hydroxypropyl methylcellulose acetate succinate comprising:
1) a liquid removal step of
a) allowing hydroxypropyl methylcellulose, an acetylating agent, and a succinoylating agent to react with each other in the presence of a catalyst to produce a reaction solution,
b) mixing water with the reaction solution to obtain a suspension of hydroxypropyl methylcellulose acetate succinate, and
c) removing liquid from the suspension of hydroxypropyl methylcellulose acetate succinate to obtain liquid-removed hydroxypropyl methylcellulose acetate succinate;
2) a first drying step of drying the liquid-removed hydroxypropyl methylcellulose acetate succinate using a fluid-bed dryer until it reaches a water content of 30% by mass while maintaining the product temperature at 28°C or lower to obtain first dried hydroxypropyl methylcellulose acetate succinate; and
3) a second drying step of further drying the first dried hydroxypropyl methylcellulose acetate succinate to obtain hydroxypropyl methylcellulose acetate succinate.

2. The method according to claim 1, wherein the hydroxypropyl methylcellulose acetate succinate in the first drying step 2) has a product temperature of 5 to 28°C.

3. The method according to claim 1 or 2, wherein the first drying step 2) involves an inlet air temperature of 5 to 70°C.

4. The method according to any one of claims 1 to 3, wherein a fluid-bed dryer is used as a dryer for use in the second drying step 3).

5. The method according to any one of claims 1 to 4, wherein the liquid-removed hydroxypropyl methylcellulose acetate succinate immediately before being subjected to the first drying step 2) has a water content of 55 to 80% by mass.

6. The method according to any one of claims 1 to 5, wherein the hydroxypropyl methylcellulose acetate succinate has a water content of 5% by mass or lower.

## Patentansprüche

1. Verfahren zur Herstellung von Hydroxypropylmethylcelluloseacetatsuccinat, umfassend:
1) einen Flüssigkeitsentfernungsschritt von
a) Ermöglichen, dass Hydroxypropylmethylcellulose, ein Acetylierungsmittel und ein Succinoylierungsmittel in Gegenwart eines Katalysators miteinander reagieren, um eine Reaktionslösung zu erzeugen,
b) Mischen von Wasser mit der Reaktionslösung, um eine Suspension von Hydroxypropylmethylcelluloseacetatsuccinat zu erhalten, und
c) Entfernen von Flüssigkeit aus der Suspension von Hydroxypropylmethylcelluloseacetatsuccinat, um flüssigkeitsentzogenes Hydroxypropylmethylcelluloseacetatsuccinat zu erhalten;
2) einen ersten Trocknungsschritt des Trocknens des flüssigkeitsentzogenen Hydroxypropylmethylcelluloseacetatsuccinats unter Verwendung eines Wirbelschichttrockners, bis es einen Wassergehalt von 30 Masse-% erreicht, während die Produkttemperatur bei 28 °C oder niedriger gehalten wird, um erstes getrocknetes Hydroxypropylmethylcelluloseacetatsuccinat zu erhalten; und
3) einen zweiten Trocknungsschritt des weiteren Trocknens des ersten getrockneten Hydroxypropylmethylcelluloseacetatsuccinats, um Hydroxypropylmethylcelluloseacetatsuccinat zu erhalten.

2. Verfahren nach Anspruch 1, wobei das Hydroxypropylmethylcelluloseacetatsuccinat bei dem ersten Trocknungsschritt 2) eine Produkttemperatur von 5 bis 28 °C aufweist.

3. Verfahren nach Anspruch 1 oder 2, wobei der erste Trocknungsschritt 2) mit einer Einlasslufttemperatur von 5 bis 70 °C verbunden ist.

4. Verfahren nach einem der Ansprüche 1 bis 3, wobei ein Wirbelschichttrockner als Trockner zur Verwendung bei dem zweiten Trocknungsschritt 3) verwendet wird.

5. Verfahren nach einem der Ansprüche 1 bis 4, wobei das flüssigkeitsentzogene Hydroxypropylmethylcelluloseacetatsuccinat unmittelbar vor Unterwerfen an den ersten Trocknungsschritt 2) einen Wassergehalt von 55 bis 80 Masse-% aufweist.

6. Verfahren nach einem der Ansprüche 1 bis 5, wobei das Hydroxypropylmethylcelluloseacetatsuccinat einen Wassergehalt von 5 Masse-% oder weniger aufweist.

## Revendications

1. Procédé de production d'acétate succinate d'hydroxypropylméthylcellulose comprenant :
1) une étape d'élimination de liquide comprenant
a) le fait de laisser de l'hydroxypropylmethylcellulose, un agent d'acétylation, et un agent de succinylation réagir les uns avec les autres en présence d'un catalyseur pour produire une solution de réaction,
b) le mélange d'eau avec la solution de réaction pour obtenir une suspension d'acétate succinate d'hydroxypropylméthylcellulose, et
c) l'élimination de liquide de la suspension d'acétate succinate d'hydroxypropylméthylcellulose pour obtenir de l'acétate succinate d'hydroxypropylméthylcellulose à liquide éliminé ;
2) une première étape de séchage de séchage de l'acétate succinate d'hydroxypropylméthylcellulose à liquide éliminé en utilisant un séchoir à lit fluidisé jusqu'à ce qu'il atteigne une teneur en eau de 30 % en masse tout en maintenant la température du produit à 28 °C ou moins pour obtenir un premier acétate succinate d'hydroxypropylméthylcellulose séché ; et
3) une deuxième étape de séchage de séchage ultérieur du premier acétate succinate d'hydroxypropylméthylcellulose séché pour obtenir l'acétate succinate d'hydroxypropylméthylcellulose.

2. Procédé selon la revendication 1, dans lequel l'acétate succinate d'hydroxypropylméthylcellulose dans la première étape de séchage 2) a une température de produit de 5 à 28 °C.

3. Procédé selon la revendication 1 ou 2, dans lequel la première étape de séchage 2) implique une température d'air d'entrée de 5 à 70 °C.

4. Procédé selon l'une quelconque des revendications 1 à 3, dans lequel un séchoir à lit fluidisé est utilisé en tant que séchoir destiné pour une utilisation dans la deuxième étape de séchage 3).

5. Procédé selon l'une quelconque des revendications 1 à 4, dans lequel l'acétate succinate d'hydroxypropylméthylcellulose à liquide éliminé immédiatement avant d'être soumis à la première étape de séchage 2) a une teneur en eau de 55 à 80 % en masse.

6. Procédé selon l'une quelconque des revendications 1 à 5, dans lequel l'acétate succinate d'hydroxypropylméthylcellulose a une teneur en eau de 5 % en masse ou moins.
